# EUROPEAN PATENT SPECIFICATION

(11) **EP 0 736 443 B1**
(45) Date of publication and mention of the grant of the patent: **28.06.2000**
(21) Application number: 96200818.1
(22) Date of filing: 25.03.1996
(51) Int. Cl.: B62D 33/067

(54) **Hydraulic tilting device for a cab**
Hydraulikanlage zum Kippen einer Fahrerkabine
Installation hydraulique de basculement pour une cabine de camion

(30) Priority: 04.04.1995 NL 1000038
(43) Date of publication of application: 09.10.1996
(73) Proprietor: APPLIED POWER INC., Butler Wisconsin 53007 (US)
(72) Inventor: Oudelaar, Tone, 7576 CA Oldenzaal (NL); Sonneborn, Lambertus Johannes, 7576 EM Oldenzaal (NL)
(74) Representative: Brookhuis, Hendrik Jan Arnold

(56) References cited:
- DE-A- 2 210 754
- DE-A- 19 504 719
- US-A- 4 355 565
- PATENT ABSTRACTS OF JAPAN vol. 011, no. 263 (M-619), 26 August 1987 & JP-A-62 064673 (KAYABA IND CO LTD), 23 March 1987,

## Description

The present invention relates to a hydraulic tilting device for a cab, in particular a lorry cab, according to the preamble of claim 1.

A tilting device, with two double-acting cylinders for moving the tilting cab, is known from EP 0 099 157. A single pilot-operated check valve is present in the connecting line between the raising connection of each of said cylinders and the control valve. It is this one check valve which prevents hydraulic fluid from flowing out of the cylinder space connecting to the raising connection of the cylinder concerned. If said check valve fails, irrespective of the position of the control valve, hydraulic fluid can leak out into the reservoir. If the control valve is of the spool valve type, i.e. by sliding a spool element in the housing of the valve, valve ports are brought into communication with each other, or the existing communication is broken. In practice, in the case of such a valve a leakage flow is possible through the seals not being entirely tight, in particular after wear has occurred. This can therefore be the reason why a pilot-operated check valve is used for reliably preventing accidental movement of the cab.

In the case of the device known from EP 0 099 157 there is a chance of the check valve becoming defective, with the result that an accidental and potentially dangerous movement of the cab occurs. This chance means a risk for persons below the cab which has been moved up by the cylinders, in particular for maintenance mechanics. This risk is undesirable in particular in the case of vehicles which are designed in such a way that the cab remains resting on the cylinders in the tilted-up position, i.e. the centre of gravity of the cab does not move past the pivot axis of the cab. This is the case in, for example, fire engines with an elongated cab, in which the centre of gravity lies relatively far behind the pivot axis between the cab and the chassis.

A hydraulic device according to the preamble of claim 1 is known from US 4 355 565. In this device a first and a second check valve operated by a control pressure signal are provided in the line between the raising connection of each double-acting cylinder and the control valve, which check valves close in the direction of the control valve.

Through the fact that each connection between a raising connection of the one cylinder or each of the cylinders, on the one hand, and the control valve, on the other hand, is made secure by means of two check valves placed in series, the chance of the device failing and accidental movement of the cab as a result is considerably lower than in the case of the device known from EP 0 099 157.

Although the first check valves of this known device are of an identical design it will be observed in practice that these check valves will not open absolutely simultaneously upon retraction of the cylinders. When lowering a cab this would lead to one side of the cab being lowered sooner than the other side. To overcome this problem the known device has resolver means to obtain an equalization of the pressures in the cylinders upon retraction of these cylinders. These resolver means however only come into action after a pressure difference between the cylinders has occured.

The object of the present invention is to solve the problem of cab deformation in a simple manner.

A hydraulic tilting device, identical to that described in claims 1, 2 and 5, is also known from document DE-A-19504719, published on 22/08/96, with filing data 14/02/95.

The present invention achieves this object by providing a device according to claim 1.

Further advantageous embodiments of the tilting device according to the invention are described in the subclaims.

The invention is explained below with reference to exemplary embodiments of the hydraulic tilting device according to the invention shown diagrammatically in the drawing, in which:
Fig. 1 shows a first preferred embodiment of the tilting device according to the invention;
Fig. 2 shows a second preferred embodiment of the tilting device according to the invention; and
Fig. 3 shows a variant of the control valve shown in Figs. 1 and 2.

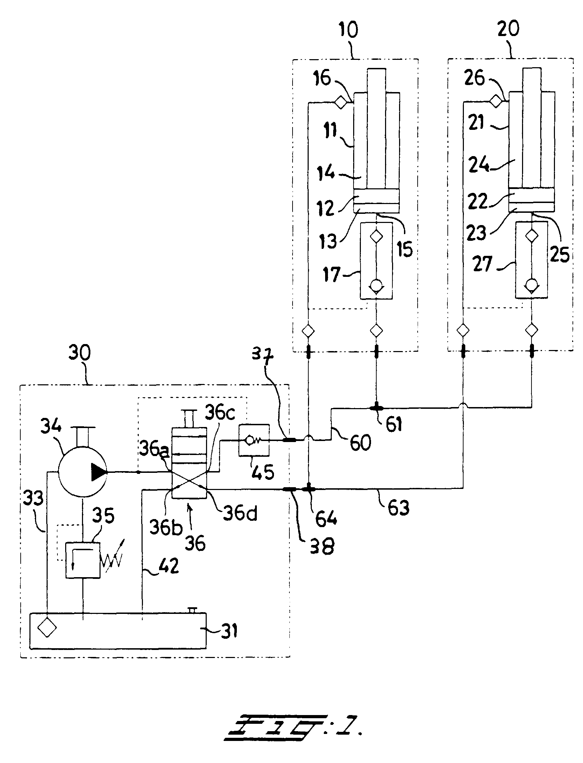

The tilting device for the cab of a lorry shown in Figure 1 comprises three units interconnected by hydraulic lines. Each unit is indicated by a dashed-and-dotted line. They are the first cylinder unit 10, the second cylinder unit 20, and the hand pump unit 30.

The first and the second cylinder unit 10 and 20 are of identical design. Each unit 10, 20 comprises a double-acting hydraulic cylinder 11, 21 respectively, in which piston 12, 22 bounds two cylindrical spaces 13, 14 and 23, 24 in the cylinder. As is usual, the cylinders 11 and 21 are fitted in such a way between the tilting cab and the chassis of the vehicle that when hydraulic fluid is supplied to the spaces 13 and 23 the cab is moved up. To this end, cylinder 11 has a connection 15, and cylinder 21 a connection 25; in the context of the present invention these connections 15 and 25 are indicated as raising connections.

For moving the cab down, each of the cylinders 11 and 21 is provided with a lowering connection 16 and 26 respectively.

The cylinder units 10, 20 also comprise a pilot-operated check valve 17 and 27 respectively, which when closed prevent fluid from flowing away out of the corresponding cylinder space 13, 23. The pressure in the lowering connection 16 and 26 of the cylinder concerned serves as the control signal for the pilot-operated check valves 17 and 27 respectively.

The hand pump unit 30 comprises a reservoir 31. A suction line 33 connects the reservoir 31 to hand pump 34. Overpressure relief valve 35 is also provided. In addition, the hand pump unit 30 comprises a direction control spool valve 36, in this example a 4/2-spool valve. The ports of the valve 36 are pump port 36a, reservoir port 36b, raising port 36c and lowering port 36d. The valve 36 is a manually-operated type.

The hand pump unit 30 also has a connection 37, connected to which is a hydraulic line system, connecting the pump unit 30 to the raising connections 15 and 25 of the cylinders 11 and 21. The hand pump unit 30 also has a connection 38, connected to which is a hydraulic line system which connects the pump unit 30 to the lowering connections 16, 26 of the cylinders 11 and 21.

A pilot-operated check valve 45, which when closed blocks a fluid flow in the direction of the control valve 36, is accommodated between the raising port 36c of the control valve 36 and the connection 37 of the hand pump unit 30. The dashed line indicates that the control signal for the valve 45 has been derived from the pressure at the side of the pump port 36a of the control valve 36.

The connection 37 of the hand pump unit 30 and the raising connections 15 and 25 of the cylinders are connected to each other by a line 60, which splits into two branches at junction 61. Likewise, the connection 38 of the pump unit 30 and the lowering connections 16 and 26 of the cylinders are connected to each other by a line 63, which splits into two branches at junction 64.

The hydraulic tilting device described above has a very low chance of failure, due to the fact that two pilot-operated check valves are provided in each case in the connecting line between each of the raising connections 15, 25 of the two cylinders 11, 21 on the one hand and the port 36d of the control valve 36 on the other hand. These are the valves 17 and 45 in the connecting line to the cylinder 11 and the valves 27 and 45 in the connecting line to the cylinder 21. This means that an undesirable and dangerous downward movement of the cab will only occur if all three of the check valves 17, 27 and 45 no longer function. This chance of such an unsafe situation is extremely low. This considerable improvement in safety compared with the known tilting device is obtained at low cost; the cylinder units 10 and 20 are identical to each other and are simple in design, and check valve 45 can be fitted at little expense. In particular, fitting check valve 45 is cheaper than replacing the control valve 36 with a different type of valve which is free from leakages.

The chance of failure is also low because the check valves 17 and 27 are each fitted in or on the corresponding cylinder 11 and 21 respectively and the check valve 45 forms part of or is fitted as a separate part on the pump unit 30. In practice, the cylinders 11, 21 and the pump unit 30 are situated at different points of the vehicle, so that the chance of the valves 17, 27 and 45 becoming damaged simultaneously, for example through mechanical influences, is very small.

The tilting device shown also provides a reliable safety device for the situation where the fastening of one of the cylinders 11 and 21 comes loose during pumping up of the cab. In that case the cab will remain supported on the other cylinder, through the fact that its check valve reliably blocks the flow of hydraulic fluid out of the raising connection of that cylinder. The cab will not suddenly fall down then, despite the fact that one of the cylinders has come loose.

Another aspect of the tilting device according to the invention is that it is now possible to solve the problem of deformation of the cab while it is being pumped down. In practice, the pilot-operated check valves 17 and 27 will often not open absolutely simultaneously while the cab is being pumped down, even though the check valves 17 and 27 are of identical design. If yet a third check valve 45 were not then present in the line between the raising connections of the cylinders 11 and 21 and the control valve 36, the result would be that the cab would be lowered sooner at one side than at the other side, and would thus be pulled out of alignment. It is clear that this effect is undesirable. Due to the fact that according to the present invention the check valve 45 is provided and the valve 45 is designed in such a way that it does not open until there is a control pressure which is higher than the control pressure at which the valves 17 and 27 open, it is ensured that the cab moves down uniformly supported by the two cylinders 11 and 21.

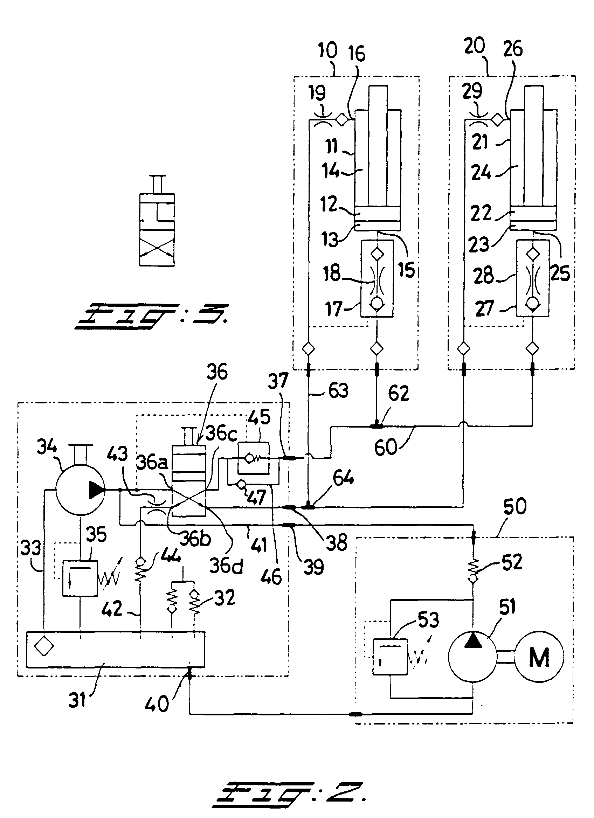

The tilting device for the cab of a lorry shown in Figure 2 corresponds in essence to the device shown in Figure 1. The same parts have therefore been given the same reference numbers. In addition to the first cylinder unit 10, the second cylinder unit 20 and the hand pump unit 30, the device shown here also has an electric pump unit 50.

The cylinder units 10, 20 each comprise a throttle unit 18 and 28 respectively, in order to control the rate of flow of the hydraulic fluid. The pressure in the lowering connection 16 and 26 of the cylinder concerned serves as the control signal for the pilot-operated check valves 17 and 27 respectively.

The hand pump unit 30 also comprises connections 39 and 40, which serve to connect the electric pump unit 50, which is fitted here as an optional extra.

The electric pump unit 50 comprises an electric pump 51, a check valve 52 and an overpressure relief valve 53.

In the hand pump unit 30, line 41 connects the connection 39 to the pump port 36a of the control valve 36. Line 42 connects reservoir 31 to reservoir port 36b. A throttle element 43 and a check valve 44 are accommodated in the line 42.

A pilot-operated check valve 45, which when closed blocks a fluid flow in the direction of the control valve 36, is incorporated between the raising port 36c of the control valve 36 and the connection 37 of the hand pump unit 30. The dashed line indicates that the control signal for the valve 45 has been derived from the pressure at the side of the pump port 36a of the control valve 36. Fitted parallel to the pilot-operated check valve 45 is a bypass line 46 with check valve 47.

The cylinder units 10, 20 are also provided with throttle elements 19, 29, for throttling the liquid flow along the lowering connections 16 and 26.

Fig. 3 shows a control valve which can be used as a variant of the control valve 36 in Figs. 1 and 2 and is known as a regenerative valve.

## Claims

1. Hydraulic tilting device for a tilting cab of a vehicle, comprising a reservoir (31) for hydraulic fluid, a pump (34) with a fluid connection to said reservoir, a first and a second double-acting cylinder (11, 21), in which the piston (12, 22) of the cylinder bounds a cylinder space (13, 23), which when hydraulic fluid is supplied thereto by way of a raising connection (15, 25) of the cylinder moves the cab up, and a cylinder space (14, 24), which when hydraulic fluid is supplied thereto by way of a lowering connection (16, 26) of the cylinder moves the cab down, and a control valve, which in a first position connects the pump (34) to the raising connection of each cylinder and connects the lowering connection to the reservoir, and in a second position connects the pump to the lowering connection of each cylinder and the raising connection to the reservoir, wherein for each cylinder (11,21) a corresponding first check valve (17, 27, 45) operated by a control pressure signal is provided in the connecting line (60) between the raising connection (15, 25) of said double-acting cylinder (11, 21) and the control valve (36), which first check valves close in the direction of the control valve and wherein a common second check valve (45) operated by a control pressure signal is provided in the connecting line (60) between the control valve (36) and each of the first check valves (17, 27) **characterized in that** the second check valve (45) is designed in such a way that when the cab is being pumped down said second check valve (45) does not open until the control pressure at this valve is higher than the control pressures at the first check valves (17, 27).

2. Hydraulic tilting device according to claim 1, in which the device comprises a first and a second cylinder unit (10, 20), each comprising a double-acting cylinder (11, 21) and the corresponding first check valve (17, 27).

3. Hydraulic tilting device according to claim 1 or 2, in which the device comprises a pump unit (30) which comprises the pump (34), the control valve (36), and the common second check valve (45).

4. Hydraulic tilting device according to one or more of the preceding claims, in which each cylinder unit (10, 20) comprises a throttle element (18, 28) which is placed in the connecting line (60) between the raising connection (15, 25) of the cylinder and the control valve (36).

5. Hydraulic tilting device according to one or more of the preceding claims, in which the check valves operated by a control pressure signal are pilot-operated check valves (17, 27, 45).

## Patentansprüche

1. Hydraulische Kippvorrichtung für eine kippbare Fahrzeugkabine, mit einem Vorratsbehälter (31) für Hydraulikfluid, einer Pumpe (34) mit einer Fluidverbindung mit dem Vorratsbehälter, einem ersten und einem zweiten doppelt wirkenden Zylinder (11, 21), in denen der Kolben (12, 22) des Zylinders einen Zylinderraum (13, 23) begrenzt, der, wenn Hydraulikfluid an ihn geliefert wird, über eine Anhebeverbindung (15, 25) des Zylinders die Kabine nach oben bewegt, und einen Zylinderraum (14, 24) begrenzt, der, wenn Hydraulikfluid an ihn geliefert wird, über eine Absenkverbindung (16, 26) des Zylinders die Kabine nach unten bewegt, und einem Steuerventil, das in einer ersten Stellung die Pumpe (34) mit der Anhebeverbindung jedes Zylinders und die Absenkverbindung mit dem Vorratsbehälter verbindet und in einer zweiten Stellung die Pumpe mit der Absenkverbindung jedes Zylinders und die Anhebeverbindung mit dem Vorratsbehälter verbindet, wobei für jeden Zylinder (11, 21) ein entsprechendes erstes Rückschlagventil (17, 27, 45), das durch ein Steuerdrucksignal betätigt wird, in der Verbindungsleitung (60) zwischen der Anhebeverbindung (15, 25) des Doppelwirkungszylinders (11, 21) und dem Steuerventil (36) vorgesehen ist, wobei die ersten Rückschlagventile in Richtung zum Steuerventil schließen und wobei ein gemeinsames zweites Rückschlagventil (45), das durch ein Steuerdrucksignal betätigt wird, in der Verbindungsleitung (60) zwischen dem Steuerventil (36) und jedem der ersten Rückschlagventile (17, 27) vorgesehen ist, **dadurch gekennzeichnet, daß** das zweite Rückschlagventil (45) so beschaffen ist, daß es, wenn die Kabine nach unten gepumpt wird, nicht öffnet, bis der Steuerdruck an diesem Ventil höher als die Steuerdrücke an den ersten Rückschlagventilen (17, 27) ist.

2. Hydraulische Kippvorrichtung nach Anspruch 1, in der die Vorrichtung eine erste und eine zweite Zylindereinheit (10, 20) enthält, wovon jede einen Doppelwirkungszylinder (11, 21) und das entsprechende erste Rückschlagventil (17, 27) enthält.

3. Hydraulische Kippvorrichtung nach Anspruch 1 oder 2, in der die Vorrichtung eine Pumpeneinheit (30) enthält, die die Pumpe (34), das Steuerventil (36) und das gemeinsame zweite Rückschlagventil (45) enthält.

4. Hydraulische Kippvorrichtung nach einem oder mehreren der vorangehenden Ansprüche, in der jede Zylindereinheit (10, 20) ein Drosselelement (18, 28) enthält, das in der Verbindungsleitung (60) zwischen der Anhebeverbindung (15, 25) des Zylinders und dem Steuerventil (36) angeordnet ist.

5. Hydraulische Kippvorrichtung nach einem oder mehreren der vorangehenden Ansprüche, in der die Rückschlagventile, die durch ein Steuerdrucksignal betätigt werden, vorgesteuerte Rückschlagventile (17, 27, 45) sind.

## Revendications

1. Dispositif hydraulique de basculement pour une cabine basculante d'un véhicule, comprenant un réservoir (31) pour du fluide hydraulique, une pompe (34) avec une liaison de fluide vers ledit réservoir, un premier et un deuxième vérins à double action (11, 21), dans lesquels le piston (12, 22) du cylindre délimite un espace de cylindre (13, 23) qui, lorsque le fluide hydraulique y est refoulé par une liaison de levage (15, 25) du vérin déplace la cabine vers le haut, et un espace de cylindre (14, 24) qui lorsque le fluide hydraulique y est refoulé par l'intermédiaire de la liaison d'abaissement (16, 26) du vérin, déplace la cabine vers le bas, et une valve de commande qui, dans une première position, relie la pompe (34) à la liaison de levage de chaque cylindre et relie la liaison d'abaissement au réservoir, et dans une deuxième position, relie la pompe à la liaison d'abaissement de chaque cylindre et la liaison de levage au réservoir, dans lequel, pour chaque vérin (11, 21) une première valve de retenue correspondante (17, 27, 45) actionnée par un signal de pression de commande, est prévue dans la conduite de liaison (60) entre la liaison de levage (15, 25) dudit vérin à double action (11, 21) et la valve de commande (36), lesquelles premières valves de retenue se ferment dans la direction de la valve de commande, et dans lequel une deuxième valve de retenue commune (45) actionnée par un signal de pression de commande, est prévue dans la conduite de liaison (60) entre la valve de commande (36) et chacune des premières valves de retenue (17, 27), caractérisé en ce que la deuxième valve de retenue (45) est réalisée de telle façon que lorsque la cabine est repoussée en position basse, ladite deuxième valve de retenue (45) ne s'ouvre pas aussi longtemps que la pression de commande dans cette valve reste supérieure aux pressions de commande sur les premières valves de retenue (17, 27).

2. Dispositif hydraulique de basculement selon la revendication 1, dans lequel le dispositif comporte une première et une deuxième unités de vérins (10, 20), chacune comprenant un vérin à double action (11, 21) et la première valve de retenue correspondante (17, 27).

3. Dispositif hydraulique de basculement selon la revendication 1 ou 2, dans lequel le dispositif comporte une unité de pompage (30) qui comporte la pompe (34), la valve de commande (36) et la deuxième valve de retenue commune (45).

4. Dispositif hydraulique de basculement selon l'une ou plusieurs des revendications précédentes, dans lequel chaque unité de vérin (10, 20) comporte un élément d'étranglement (18, 28) qui est placé dans la conduite de liaison (60) entre la liaison de levage (15, 25) du vérin et la valve de commande (36).

5. Dispositif hydraulique de basculement selon l'une ou plusieurs des revendications précédentes, dans lequel les valves de retenue actionnées par un signal de pression de commande sont des valves de retenue (17, 27, 45) actionnées par des valves pilotes.
